# EUROPEAN PATENT APPLICATION

(11) **EP 2 048 887 A1**
(43) Date of publication of application: **15.04.2009**
(21) Application number: 07301459.9
(22) Date of filing: 12.10.2007
(51) Int. Cl.: H04N 7/26, G06T 11/00

(54) **Encoding method and device for cartoonizing natural video, corresponding video signal comprising cartoonized natural video and decoding method and device therefore**

(71) Applicant: Thomson Licensing, 92100 Boulogne-Billancourt (FR)
(72) Inventor: Zhu, Lihua, 100085 Beijing (CN); Chen, Zhibo, 100085 Beijing (CN); Yang, Libo, 100085 Beijing (CN)
(74) Representative: Rittner, Karsten

(57) **Abstract**

The invention is related to an encoding method and device which allows for providing cartoonized video. The invention is further related to corresponding decoding methods and devices. The invention is also related to corresponding video signals.

An encoding method, which allows for providing a cartoonization of the source video and for recombining the source video from the cartoonization of the source video and a residual video, comprises the following steps:
Cartoonizing the source video, encoding a first video, reconstructing the first video, determining a first residual video between a second video and the reconstructed first video, encoding the first residual video and combining the encoded first video and the encoded first residual video wherein one of the first video and the second video is the source video and the other is the cartoonized source video.

## Description

### Background

The invention is related to an encoding method and device which allows for providing cartoonized video. The invention is further related to corresponding decoding methods and devices. The invention is also related to corresponding video signals.

Video cartoonization attracts more and more attention in recent years. A source video, also called natural or photorealistic video, is unified, edge processed, overlaid with edges and/or quantized to generate cartoon-like effects.

Cartoonization or cartoonizing is also known as non-photorealistic rendering. Cartoonizing smoothes low contrast regions. At the same time it enhances high contrast regions.

Cartoonization keeps or fortifies the edges and lines of the source image, while unifying the color in almost continuous regions. This produces the cartoon-like effect. A cartoon may have sharp shadows, little highlights and contours of objects are overlaid with contour lines.

Detailed descriptions of techniques for cartoonization/non-photorealistic rendering are given, for instance, in European Patent Application EP07301342 or in H. Winnemoller, S. C. Olsen and B. Gooch, "Real-time Video Abstraction", in ACM SIGGRAPH 2006. The terms cartoonizing and cartoonization as used within the current application refer to one or more of said described techniques.

Cartoonized movies are very vivid, which is welcomed by most of the audiences, especially by kids. Besides utilization for movies, cartoonized video is also suitable for video communication applications, such as internet protocol television (IPTV), mobile television (mobile TV) and video conferencing.

The special cartoon-like video will make all these application more attractive. Furthermore, the cartoon-like effect is achieved by removing some detailed information. Thus, cartoonized video are likely to require less bandwidth than the corresponding source video.

But the removed detailed information may be very important to some audiences. Or people would like to refer to the source video for some details while watching cartoonized video.

Therefore, it is desirable to provide a cartoonized video and its corresponding source video at the same time.

### Invention

This achieved by the methods, devices and video signal of the independent claims.

An encoding method, which allows for providing a cartoonization of a source video and for recombining the source video from the cartoonization of the source video and a residual video, comprises the following steps:

Cartoonizing the source video, encoding a first video, reconstructing the first video, determining a first residual video between a second video and the reconstructed first video, encoding the first residual video and combining the encoded first video and the encoded first residual video wherein one of the first video and the second video is the source video and the other is the cartoonized source video. That is, either the second video is the source video and the first video is the cartoonized source video or the first video is the source video and the second video is the cartoonized source video.

Said encoding method may result in a video signal comprising the first video encoded in a base layer, an enhancement layer comprising the encoded first residual video wherein either a cartoonization of a source video is reconstructible by combining a reconstruction of the first video and a reconstruction of the first residual video if the first video is a source video or the source video is reconstructible by combining a reconstruction of the first video and a reconstruction of the first residual video if the first video is the cartoonization of the source video.

If the first video is the source video, a photorealistic video can be extracted from said video signal by a decoding method comprising the following steps:

Separating an encoded first residual video and an encoded cartoonized video, reconstructing the cartoonized video, reconstructing the first residual video and forming the photorealistic video by combining the cartoonized video and the first residual video.

If the first video is the cartoonization of the source video, a high quality cartoon can be extracted from said video signal by execution of the following steps:

Separating an encoded first residual video and an encoded photorealistic video, reconstructing the photorealistic video, reconstructing the first residual video and forming the cartoon by combining the photorealistic video and the first residual video.

Further embodiments of the methods and devices comprise features of one or more dependent claims.

### Drawings

Exemplary embodiments of the invention are illustrated in the drawings and are explained in more detail in the following description.

In the figures:
- Fig. 1: shows a flow chart of an exemplary cartoonization method as known in the art,
- Fig. 2a, 2b, 2c and 2d: show exemplary embodiments of a first kind of inventive encoding devices,
- Fig. 3a, 3b, 3c and 3d: show exemplary embodiments of a first kind of inventive decoding devices,
- Fig. 4a, 4b, 4c and 4d: show exemplary embodiments of a second kind of inventive encoding devices,
- Fig. 5a, 5b, 5c and 5d: show exemplary embodiments of a second kind of inventive decoding devices,
- Fig. 6a and 6b: show exemplary embodiments of a third kind of inventive encoding devices and
- Fig. 7a and 7b: show exemplary embodiments of a third kind of inventive decoding devices.

### Exemplary embodiments

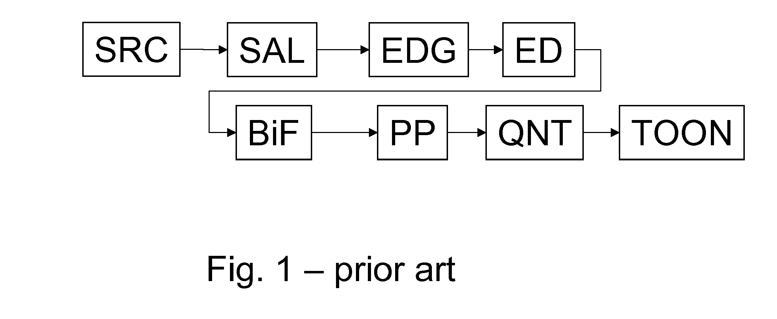

When cartoonizing a natural or photorealistic video commonly the steps depicted in fig. 1 are performed. That is, from the natural video SRC a salience map is generated in step SAL. Then, edges are detected EDG. The edges are subjected to morphological operations like dilatation and/or erosion ED. The video resulting from this step may be bilaterally filtered BiF and post processed PP prior to quantization QNT which yields the cartoonized video TOON. A detailed description of the steps of cartoonization as applied in the inventive encoding methods and devices as well as the inventive decoding methods and devices is given in European Patent Application EP07301342.

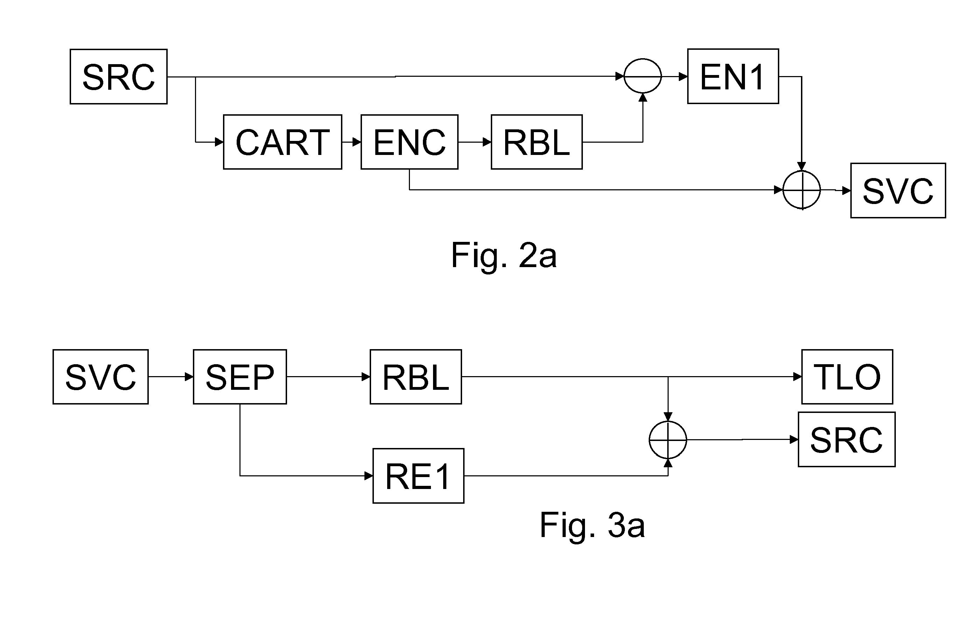

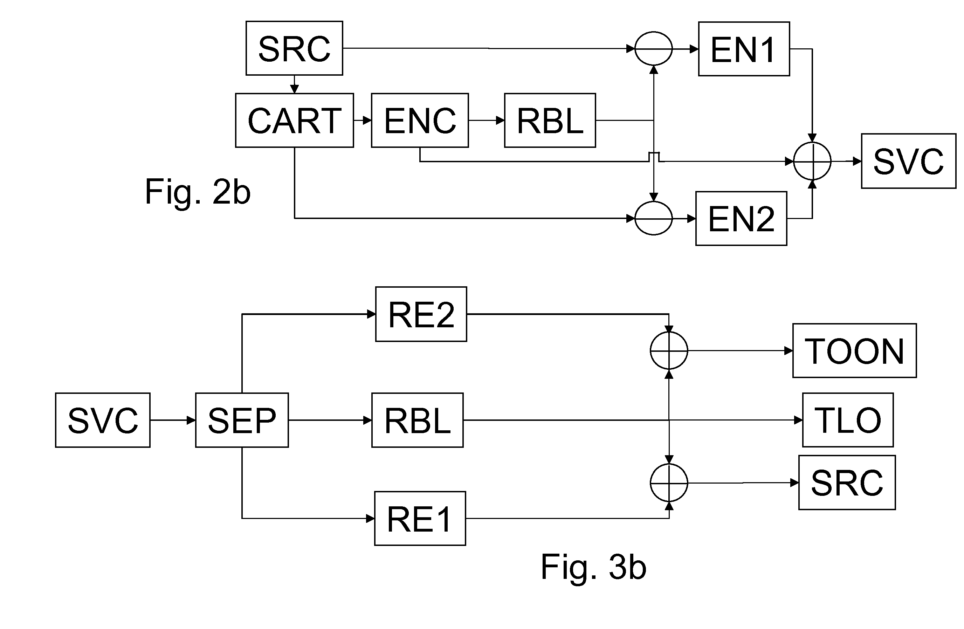

Fig. 2a and 2b show two exemplary embodiments of a first kind of encoder for encoding natural video together with a cartoonization of the natural video.

The natural video SRC is fed into a cartoonizer CART. The resulting cartoon is forwarded to encoding means ECN. The encoding means ENC pass the encoded cartoon to a reconstructor RBL. The reconstructed cartoon is compared with the source SRC and a resulting residual is encoded by residual encoding means EN1. Said residual encoding means EN1 may be comprised in the encoding means ENC. The encoded residual is then combined with the encoded cartoon resulting in an output video signal SVC.

In fig. 2b the output video signal SVC comprises an encoded additional residual. The encoded additional residual is the result of a comparison of the natural video SRC modified by the cartoonizer CART with the reconstructed cartoon output by the reconstructor RBL. The difference between said two videos is encoded by further residual encoding means EN2 as the encoded additional residual. Again, said further residual encoding means EN1 may be comprised in the encoding means ENC.

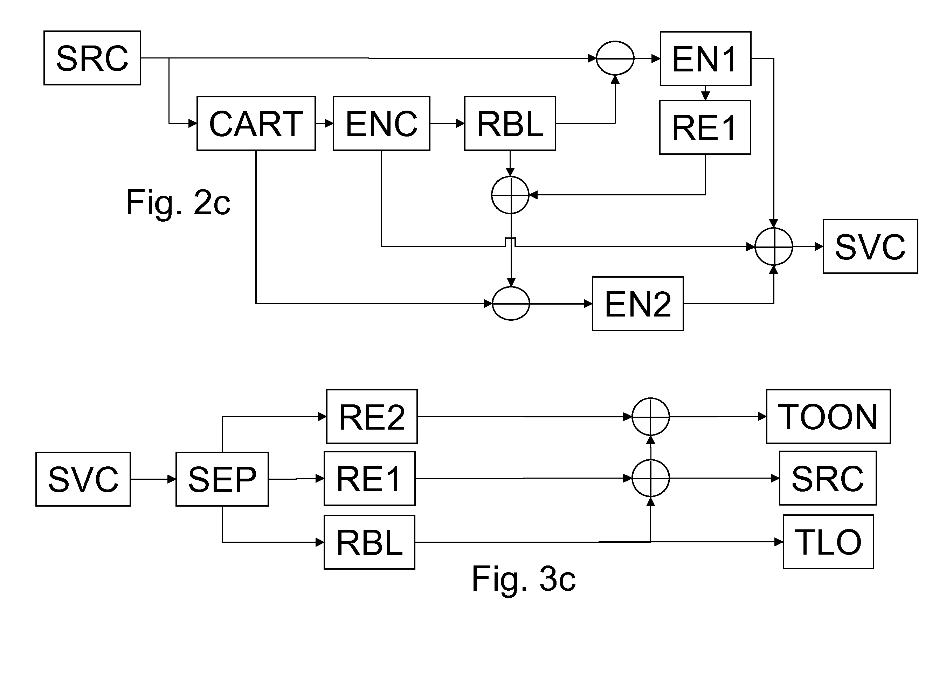

A third exemplary embodiment of the first kind of encoder for encoding natural video together with a cartoonization of the natural video is depicted in fig. 2c. In said third exemplary embodiment the difference between the natural video SRC modified by the cartoonizer CART and an intermediate reconstructed video is encoded as the encoded additional residual video. The intermediate reconstructed video is formed by combination, for instance by possibly weighted, pixel-wise adding, of the reconstructed cartoon with a reconstruction of the encoded residual. Said reconstruction of the encoded residual is formed by residual reconstructing means RE1 which may be realised by the reconstructor RBL.

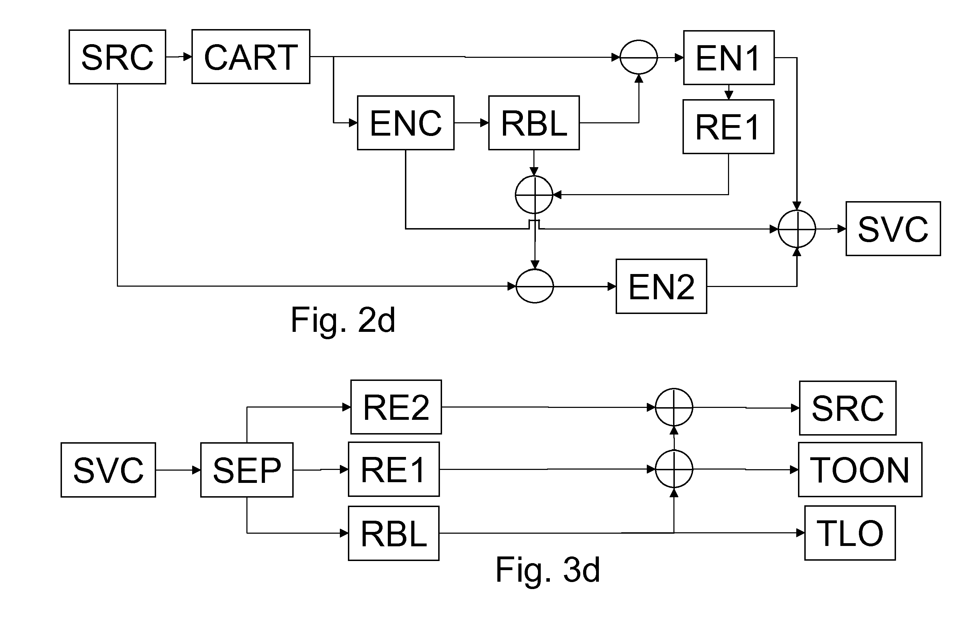

A fourth exemplary embodiment of the first kind of encoder for encoding natural video together with a cartoonization of the natural video is depicted in fig. 2d. Said fourth exemplary embodiment equals the exemplary embodiment of fig. 2c despite the fact that the contents of the residual and the further residual differ. In fig 2d, the residual is formed by comparing the cartoonized source with the reconstructed cartoon. And, the difference between the natural video SRC and the intermediate reconstructed video is encoded as the encoded additional residual video wherein the intermediate reconstructed video is formed by combination of the reconstructed cartoon with a reconstruction of the encoded residual.

The encoded source, the encoded residual and the encoded additional residual, if there is any, may be combined in the output stream SVC following a scalable video coding scheme. Then, the encoded cartoon may be comprised in a base layer while a first enhancement layer comprises the encoded residual. If the encoded additional residual exists, it may be comprised in a second enhancement layer.

Then, the cartoon may be encoded with a low bit rate such that low bandwidth devices are allowed for decoding the base layer, only, resulting in a base cartoon which is of low quality. At the same time, a high bandwidth device may decode a high quality cartoon and/or a high quality version of the natural video the high quality cartoon is generated from. This is achieved through decoding of the residual and/or the additional residual comprised in the first and/or the second enhancement layer. The high bandwidth device may also allow a user to switch between the different cartoon qualities and/or between natural video and cartoon.

Exemplary embodiments of a first kind of decoding devices which are suitable for extracting the source and/or a cartoon of the source video are shown in the figures 3a, 3b, 3c and 3d. Said first kind of decoders corresponds to the first kind of encoding devices exemplarily described by help of the embodiments depicted in figures 2a, 2b, 2c and 2d.

All decoding devices of the first kind comprise a separator SEP for separating the encoded base cartoon from the encoded residual and the further encoded residual, if there is any, from the received video signal SVC. Furthermore, all decoders of the first kind comprise means for reconstructing RBL the encoded base cartoon and means for reconstructing RE1 the encoded residual.

In figures 3a, 3b and 3c the decoder may output a reconstruction TLO of the base cartoon or -by combination of the reconstructed base cartoon TLO with a reconstruction of the encoded residual- the decoder may output the natural video SRC.

The reconstruction of the base cartoon TLO may be of low quality due to distortions and artefacts introduced by the encoding process. Therefore, the exemplary embodiments of figures 3b and 3c further comprises means for reconstructing RE2 the encoded additional residual.

In fig. 3b, the quality of said base cartoon might be enhanced by combining the base cartoon TLO with the reconstructed additional residual resulting in an enhanced cartoon TOON.

And in fig 3c, the enhanced cartoon TOON is yielded by combining the natural video SRC and with the reconstructed additional residual.

In fig 3d, the decoder may output a reconstruction TLO of the base cartoon or -by combination of the reconstructed base cartoon TLO with a reconstruction of the residual- the decoder may output the enhanced cartoon TOON. The natural video SRC may be yielded by combining the enhanced cartoon TOON and with the reconstructed additional residual.

The means for reconstructing RBL a base cartoon and for reconstructing RE1 the residual may be realised by same hardware. Furthermore, in fig. 3b and 3c the means for reconstructing RE2 the additional residual may be realised by said same hardware, too.

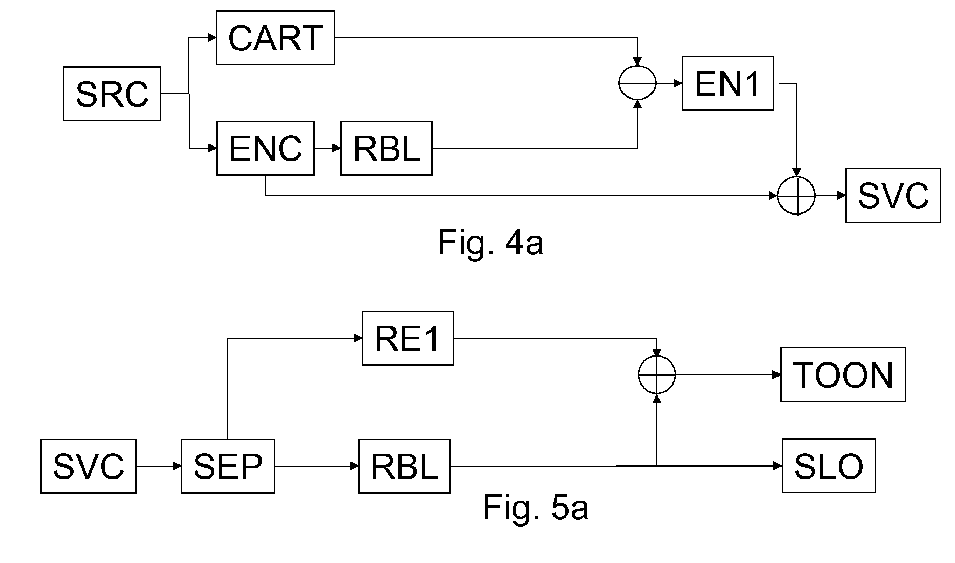

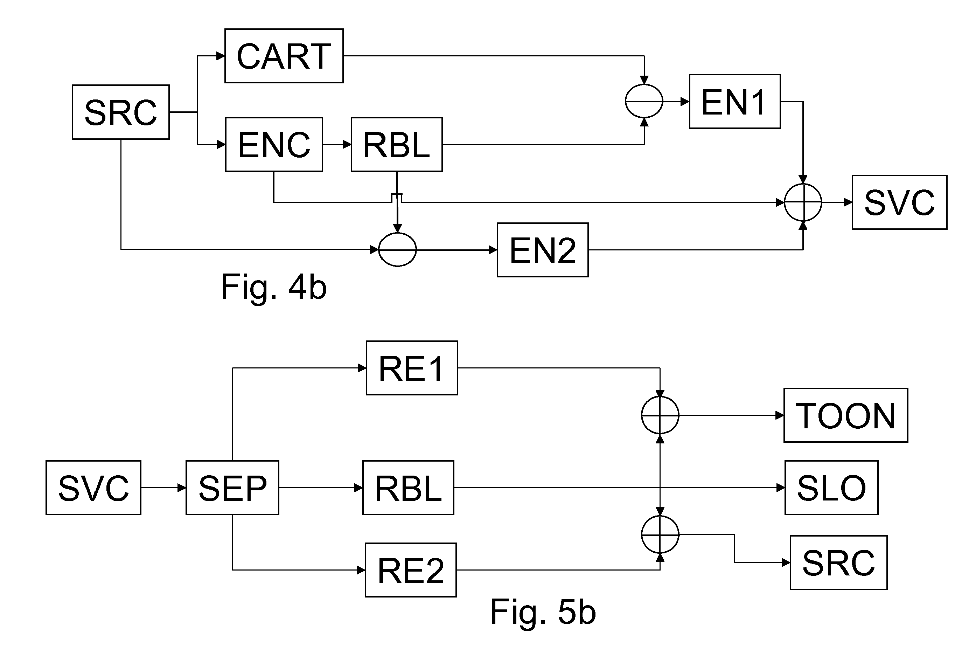

Fig. 4a and 4b show two exemplary embodiments of a second kind of encoder for encoding natural video together with a cartoonization of the natural video.

Within the embodiments depicted in fig. 4a and 4b, the natural video SRC is fed into a cartoonizer CART resulting in a cartoon. And, the natural video is forwarded to encoding means ENC. The encoding means ENC passes the encoded natural video to a reconstructor REC. The reconstruction of the natural video is compared with the cartoon. This results in a remainder which is encoded by remainder encoding means EN1. Said remainder encoding means EN1 may be realised by the encoding means ENC. The encoded remainder is then combined with the encoded natural video resulting in an output video signal SVC.

In fig. 4b the output video signal SVC comprises an additional encoded remainder. The additional encoded remainder is the result of a comparison of the natural video SRC with the reconstructed natural video. The difference between said two videos is encoded by further remainder encoding means EN2 as the encoded additional remainder. Again, said further remainder encoding means EN1 may be realised by the encoding means ENC.

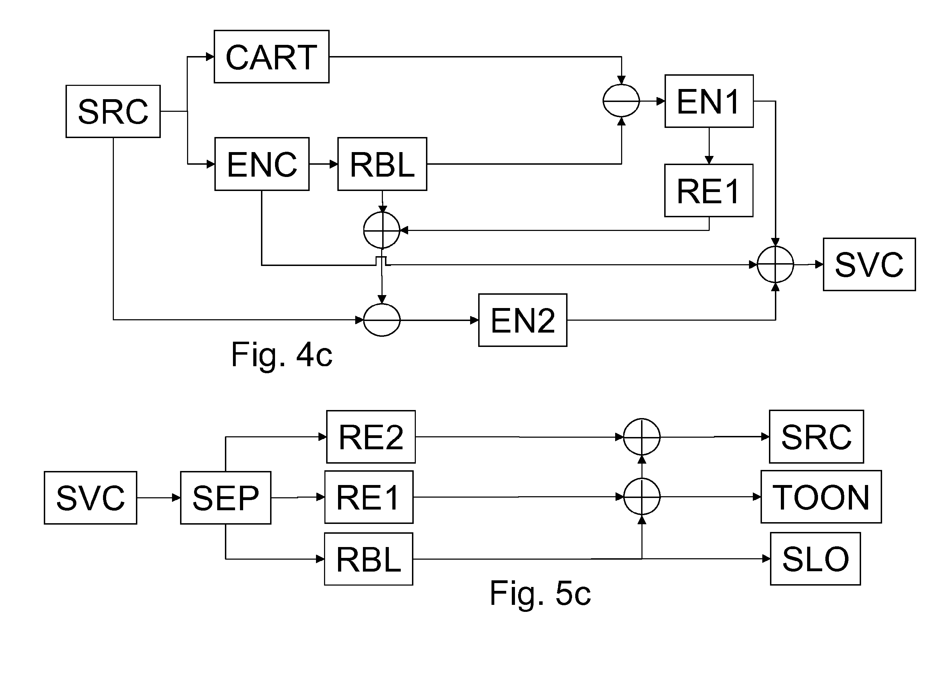

A third exemplary embodiment of the second kind of encoder for encoding natural video together with a cartoonization of the natural video is depicted in fig. 4c. In said third exemplary embodiment the difference between the natural video SRC and an intermediate reconstructed video is the additional remainder which is encoded, also. The intermediate reconstructed video is formed by combination, for instance by possibly weighted, pixel-wise adding, of the reconstructed base natural video with a reconstruction of the encoded remainder. Said reconstruction of the encoded remainder is formed by remainder reconstructing means RE1 which may be realised by the reconstructor RBL.

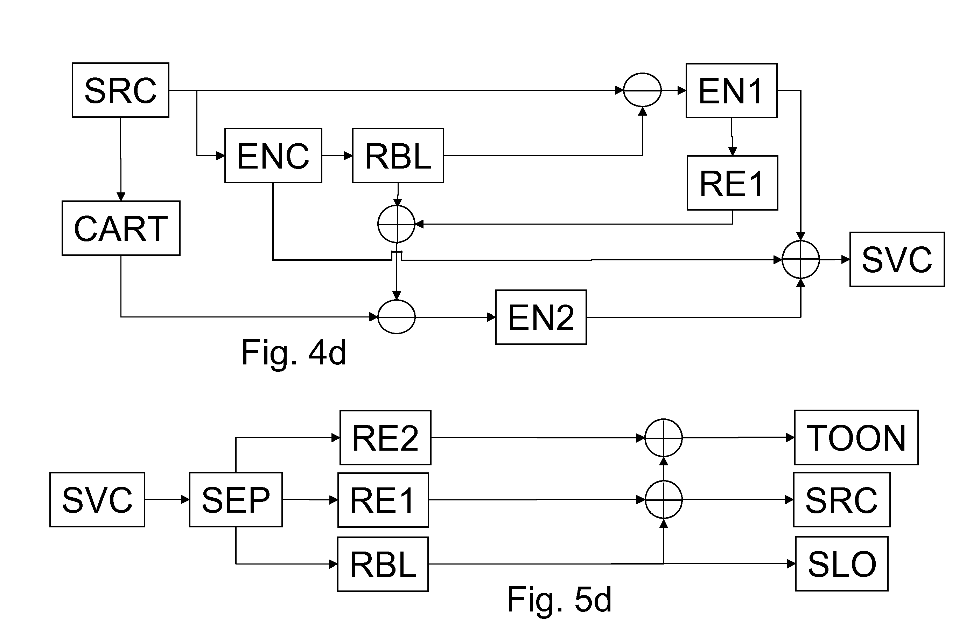

A fourth exemplary embodiment of the second kind of encoder for encoding natural video together with a cartoonization of the natural video is depicted in fig. 4d. Said fourth exemplary embodiment equals the exemplary embodiment of fig. 4c despite the fact that the contents of the remainder and the additional remainder differ. In fig 4d, the remainder is formed by comparing the natural video SRC with the reconstructed natural video. And, the difference between the cartoon and the intermediate reconstructed video is encoded as the encoded additional residual video wherein the intermediate reconstructed video is formed by combination of the reconstructed natural video with a reconstruction of the encoded residual.

Again, the encoded source, the encoded residual and the further encoded residual may be combined in the output stream SVC following a scalable video coding scheme. Then, the encoded natural video may be comprised in a base layer while a first enhancement layer comprises the encoded remainder and a second enhancement layer comprises the encoded additional remainder.

Then, the natural video may be encoded with a low bitrate such that low bandwidth devices are allowed for decoding the base layer, only, resulting in a base natural video of low quality. At the same time, a more capable device with higher bandwidth may decode a high quality cartoon and/or a high quality version of the natural video the high quality cartoon is generated from. This is achieved through decoding of the remainder and/or the additional remainder comprised in the first and/or the second enhancement layer. The more capable device may also allow a user to switch between the different natural video qualities and/or between natural video and cartoon.

Exemplary embodiments of a second kind of decoding devices which are suitable for extracting the source and/or a cartoon of the source video are shown in the figures 5a, 5b, 5c and 5d. Said second kind of decoders corresponds to the second kind of encoding devices exemplarily described by help of the embodiments depicted in figures 4a, 4b, 4c and 4d.

All decoders of the second kind comprise a separator SEP for separating the encoded base natural video from the encoded remainder and the encoded additional remainder, if there is any, from the received video signal SVC. Furthermore, all decoders of the second kind comprise means for reconstructing RBL the encoded base natural video and means for reconstructing RE1 the encoded remainder. The exemplary embodiments of figures 5b, 5c and 5d further comprise means for reconstructing RE2 the encoded additional remainder.

The decoders depicted in figures 5a, 5b and 5c may output a reconstruction SLO of the base natural video or -by combination of the reconstructed base natural video SLO with a reconstruction of the remainder- the decoder may output the enhanced cartoon TOON.

In fig. 5b, the quality of said base natural video SLO might be enhanced by combining the base natural video SLO with the reconstructed additional remainder resulting in an enhanced natural video SRC.

And in fig 5c, the enhanced natural video SRC is yielded by combining the enhanced cartoon TOON with the reconstructed additional remainder.

In fig 5d, the decoder may output the reconstructed base natural video SLO or -by combination of the reconstructed base natural video SLO with a reconstruction of the remainder- the decoder may output the enhanced natural video SRC. The enhanced cartoon TOON may be yielded by combining the enhanced natural video SRC and with the reconstructed additional remainder.

The means for reconstructing RBL a base natural video and for reconstructing RE1 the remainder may be realised by the same hardware. Furthermore, in fig. 5b and 5c the means for reconstructing RE2 the additional remainder may be realised by said same hardware, too.

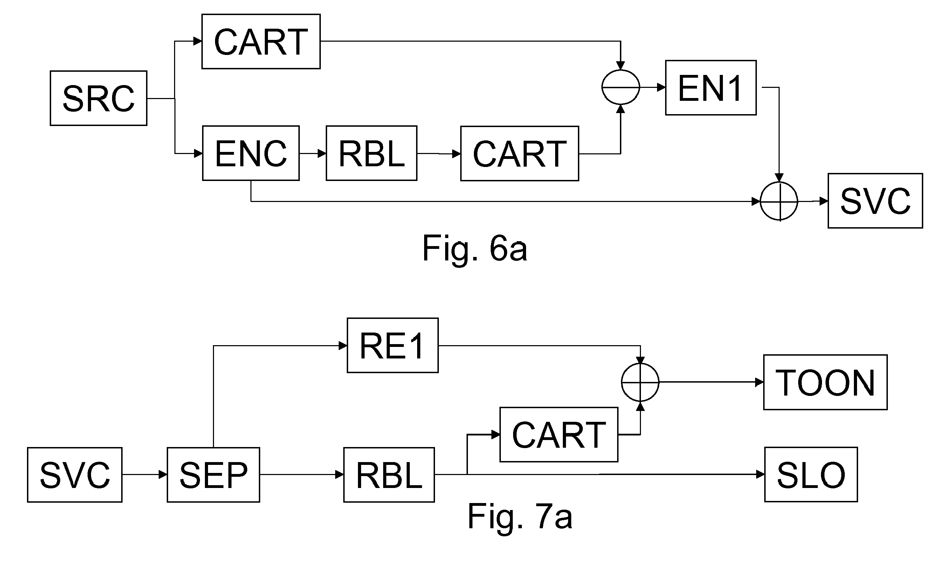

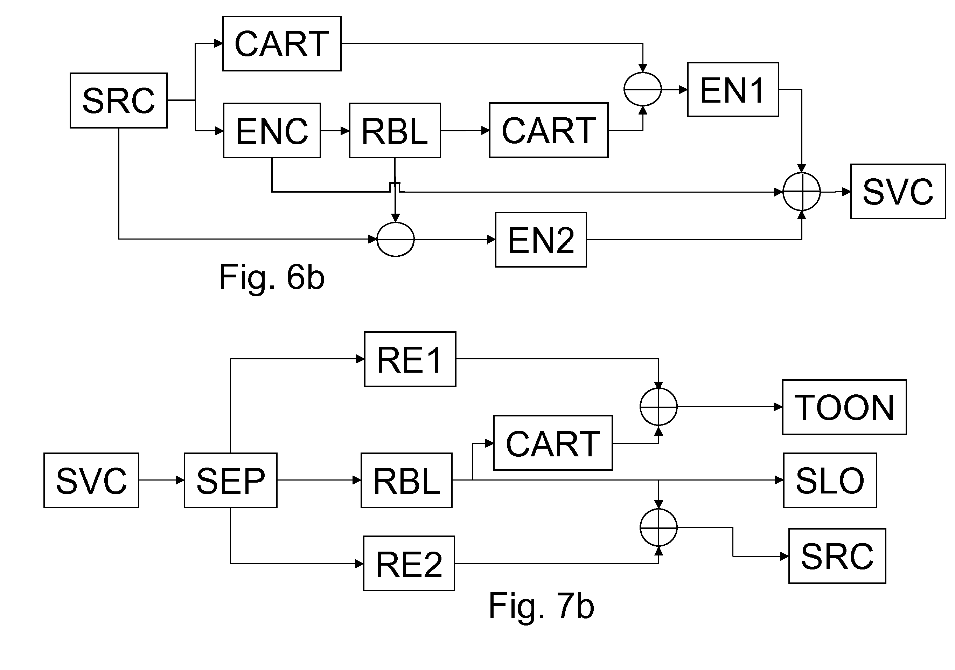

Fig. 6a and 6b show two exemplary embodiments of a third kind of encoder for encoding natural video together with a cartoonization of the natural video.

Within the embodiments depicted in fig. 6a and 6b, the natural video SRC is fed into a cartoonizer CART resulting in a cartoon. And, the natural video is forwarded to encoding means ENC. The encoding means ENC passes the encoded natural video to a reconstructor REC. The output of the reconstructor RBL is passed to the cartoonizer CART for cartoonization. The cartoonized reconstruction of the natural video is compared with the cartoon. This results in a cartoon remainder which is encoded by remainder encoding means EN1. Said remainder encoding means EN1 may be realised by the encoding means ENC. The encoded cartoon remainder is then combined with the encoded natural video resulting in an output video signal SVC.

In fig. 6b the output video signal SVC comprises an encoded natural video remainder. The encoded natural video remainder is the result of a comparison of the natural video SRC with the reconstructed natural video. The difference between said two videos is encoded by further remainder encoding means EN2 as the encoded natural video remainder. Again, said further remainder encoding means EN1 may be realised by the encoding means ENC.

Again, the encoded natural video, the encoded cartoon remainder and the encoded natural video remainder, if there is any, may be combined in the output stream SVC following a scalable video coding scheme. Then, the encoded natural video may be comprised in a base layer while a first enhancement layer comprises the encoded cartoon remainder and a second enhancement layer comprises the encoded natural video remainder, if there is any.

Then, the natural video may be encoded with a low bit rate such that low bandwidth devices are allowed for decoding the base layer, only, resulting in a base natural video of low quality. At the same time, a more capable device with higher bandwidth may decode a high quality cartoon and/or a high quality version of the natural video the high quality cartoon is generated from. This is achieved through decoding of the encoded cartoon remainder and/or the encoded natural video remainder comprised in the first and/or the second enhancement layer. The more capable device may also allow a user to switch between the different natural video qualities and/or between natural video and cartoon.

Exemplary embodiments of a third kind of decoding devices which are suitable for extracting the source and/or a cartoon of the source video are shown in the figures 7a and 7b. Said second kind of decoders corresponds to the second kind of encoding devices exemplarily described by help of the embodiments depicted in figures 6a and 6b.

Both decoders of the third kind comprise a separator SEP for separating the encoded base natural video from the encoded cartoon remainder and the encoded natural video remainder, if there is any, from the received video signal SVC. Furthermore, both decoders of the third kind comprise means for reconstructing RBL the encoded base natural video and means for reconstructing RE1 the encoded cartoon remainder. And, both decoders comprise means for cartoonization CART which serve for cartoonizing the reconstructed base natural video SLO. The exemplary embodiments of figures 7b further comprises means for reconstructing RE2 the encoded natural video remainder.

The decoders depicted in figures 7a and 7b may output a reconstruction SLO of the base natural video or -by cartoonizing the reconstructed base natural video SLO and combination of the cartoonized reconstructed base natural video SLO with a reconstruction of the cartoon remainder-the decoder may output the enhanced cartoon TOON.

In fig. 7b, the quality of said base natural video SLO might be enhanced by combining the base natural video SLO with the reconstructed natural video remainder resulting in an enhanced natural video SRC.

The means for reconstructing RBL a base natural video and for reconstructing RE1 the cartoon remainder may be realised by the same hardware. Furthermore, in fig. 7b the means for reconstructing RE2 the natural video remainder may be realised by said same hardware, too.

## Claims

1. Method for encoding a source video, said method comprising
- cartoonizing the source video,
- encoding a first video,
- reconstructing the first video,
- determining a first residual video between a second video and the reconstructed first video,
- encoding the first residual video and
- combining the encoded first video and the encoded first residual video wherein
- one of the first video and the second video is the source video and the other is the cartoonized source video.

2. Method according to claim 1, said method further comprising
- determining a second residual video between a the first video and the reconstructed first video,
- encoding the second residual video and
- combining the encoded second residual video with the encoded first video and the encoded first residual video.

3. Method according to claim 1, said method further comprising
- reconstructing the encoded first residual,
- forming a intermediate reconstructed video by adding the reconstructed first residual to the reconstructed first video,
- determining a second residual video between the first video and the intermediate reconstructed video,
- encoding the second residual video and
- combining the encoded second residual video with the encoded first video and the encoded first residual video.

4. Method for extracting a first video, the method comprising
- separating an encoded first residual video and an encoded second video,
- reconstructing the second video,
- reconstructing the first residual video and
- forming the first video by combining the second video and the first residual video wherein
- one of the first video and the second video is the source video and the other is the cartoonized source video.

5. Method according to claim 4, the method further comprising
- separating an encoded second residual video,
- reconstructing the second residual video and
- combining the second residual video with the second video and the first residual video.

6. Method according to claim 4 or 5, the method further comprising
- cartoonizing the reconstructed second video prior to combining it with the first residual video.

7. Encoding device comprising
- means (CART) for cartoonizing a source video,
- means (ENC, EN1, EN2) for encoding a first video and a residual video,
- means (RBL) for reconstructing the encoded first video,
- means for determining the residual video as the difference between a second video and the reconstructed first video and
- means for combining the encoded first video and the encoded residual video wherein
- one of the first video and the second video is the source video and the other is the cartoonized source video.

8. Device for decoding a source video, the device comprising
- means (SEP) for separating an encoded residual video and an encoded base video,
- means (RBL, RE1) for reconstructing the encoded residual video and the encoded base video,
- means for cartoonizing the reconstructed base video and
- means for forming the source video by adding the reconstructed residual video and the cartoonized reconstructed base video.

9. Method for encoding according to claim 1-3, method for extracting according to claim 5, encoding device according to claim 7 or decoding device according to claim 8, wherein cartoonizing comprises unifying low contrast regions, edge processing, edge overlay and/or quantization.

10. Video signal (SVC) comprising
- a first video encoded in a base layer,
- an enhancement layer comprising an encoded residual video wherein
- a second video is reconstructible by combining a reconstruction of the first video and a reconstruction of the residual video wherein
- one of the first video and the second video is the source video and the other is the cartoonized source video.
